# EUROPEAN PATENT APPLICATION

(11) **EP 4 331 408 A1**
(43) Date of publication of application: **06.03.2024**
(21) Application number: 22795355.1
(22) Date of filing: 17.03.2022
(51) Int. Cl.: A24F 40/50, A24F 40/65

(54) **POWER UNIT FOR INHALER**

(30) Priority: 28.04.2021 JP 2021076016
(71) Applicant: Japan Tobacco, Inc., Tokyo, 105-6927 (JP)
(72) Inventor: YAMADA, Manabu, Tokyo 130-8603 (JP); AOYAMA, Tatsunari, Tokyo 130-8603 (JP); KAWANAGO, Hiroshi, Tokyo 130-8603 (JP); NAGAHAMA, Toru, Tokyo 130-8603 (JP); FUJIKI, Takashi, Tokyo 130-8603 (JP); YOSHIDA, Ryo, Tokyo 130-8603 (JP)
(74) Representative: Hoffmann Eitle
(86) International application number: PCT/JP2022/012256
(87) International publication number: WO 2022/230433

(57) **Abstract**

Provided is a power unit for an inhaler that generates an aerosol with a flavor component imparted, which supplies power to a heater that heats an aerosol source. The power unit comprises a power source, a power supply unit that supplies power from the power source to the heater, a notification unit, and a control unit that controls the power supply unit and the notification unit. The control unit controls the power supply unit according to a predetermined control sequence, and controls the notification unit to notify the timing where the amount of the flavor component contained in the aerosol is a predetermined amount during an inhalable period defined by the control sequence.

## Description

### TECHNICAL FIELD

The present invention relates to a power supply unit for an inhalation device.

### BACKGROUND ART

An inhalation device such as a heated tobacco product can include a base material including an aerosol source and a flavor source, and a power supply unit that accommodates the base material and heats the base material by supplying electric power from a power supply to a heater

The power supply unit starts to supply electric power from the power supply to the heater in response to an aerosol generation request issued by an operation of an operation button or an inhalation operation, thereby setting an inhalation enable state. In general, from the viewpoint of safety and power saving, an inhalation enable period can be limited to a predetermined length.

It is preferable for the user to be notified that the power supply unit is in the inhalation enable state. For example, PTL 1 discloses that the user is notified that a preheating time elapses to set the inhalation enable state.

### CITATION LIST

### PATENT LITERATURE

PTL 1: International Publication No. 2020/084756

### SUMMARY OF INVENTION

### TECHNICAL PROBLEM

Conventionally, there has been known a technique of notifying the user of an inhalation enable period from when a notification of the start of the inhalation enable period is made until the inhalation enable period ends. However, this notification is not always a notification at a timing when it is possible to provide a flavor to be desirably provided to the user

The present invention provides a power supply unit for an inhalation device that can notify a user of a timing at which it is possible to provide a flavor to be desirably provided to the user.

### SOLUTION TO PROBLEM

According to one aspect of the present invention, there is provided a power supply unit, that supplies electric power to a heater configured to heat an aerosol source, for an inhalation device configured to generate aerosol added with a flavor component, characterized by comprising a power supply, a power supplier configured to supply electric power from the power supply to the heater, a notification unit, and a control unit configured to control the power supplier and the notification unit, wherein the control unit controls the power supplier in accordance with a predetermined control sequence, and controls the notification unit to make a notification of at least one timing including a timing at which an amount of the flavor component contained in the aerosol becomes a predetermined amount during an inhalation enable period determined by the control sequence.

According to an embodiment, the control unit sets at least one of a timing and a pattern of the notification.

According to an embodiment, the power supply unit further comprises a communication unit configured to communicate with an external communication device, and the control unit executes, via the communication unit, pairing for associating the power supply unit and the external communication device with each other, and sets at least one of the timing and the pattern of the notification using the paired external communication device.

According to an embodiment, the control unit controls the notification unit to further make a start notification to notify of a start of the inhalation enable period and an end advance notification to notify of an end of the inhalation enable period, and the notification is a notification in a form different from forms of the start notification and the end advance notification.

According to an embodiment, the control unit disables a notification whose timing difference from one of the start notification and the end advance notification is shorter than a predetermined value.

According to an embodiment, the control sequence is a control sequence based on a control profile in which time-series transition of a target temperature of the heater is defined, the control profile includes a first section in which a second temperature lower than a first temperature raised by preheating is retained, and a second section in which a temperature of the heater is raised to a third temperature higher than the second temperature after the first section, and a form of a notification in the first section is different from a form of a notification in the second section.

According to an embodiment, in a case where the control profile is changed, the control unit changes a timing of the notification in accordance with the changed control profile.

### ADVANTAGEOUS EFFECTS OF INVENTION

According to the present invention, there is provided a power supply unit for an inhalation device that can notify a user of a timing at which it is possible to provide a flavor to be desirably provided to the user.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
Fig. 1A is a perspective view of the outer appearance of an inhalation device;
Fig. 1B is a perspective view of the outer appearance of the inhalation device;
Fig. 2 is a view of the internal arrangement of the inhalation device;
Fig. 3 is a block diagram showing the functional arrangement of a power supply unit;
Fig. 4 is a view showing an example of transition of the state of the power supply unit;
Fig. 5 is a timing chart showing an example of a temperature profile;
Fig. 6 is a flowchart illustrating an example of notification control;
Fig. 7 is a table showing an example of notification setting information;
Fig. 8 is a flowchart illustrating an example of notification control; and
Fig. 9 is a view showing an example of a notification setting screen.

### DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made an invention that requires all such features, and multiple such features may be combined as appropriate. Furthermore, in the attached drawings, the same reference numerals are given to the same or similar configurations, and redundant description thereof is omitted.

### <Arrangement of Inhalation Device>

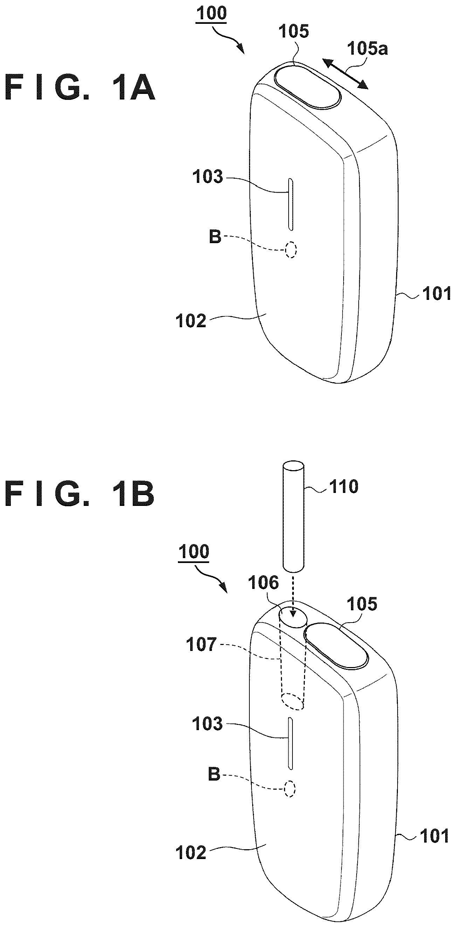

Figs. 1A and 1B show an example of the outer appearance of an inhalation device 100 according to an embodiment. The inhalation device 100 provides, to a user via a stick 110, flavored aerosol, a gas containing aerosol and a flavor material, aerosol, or aerosol containing a flavor material (flavor component) in accordance with an operation of requesting aerosol (to be also referred to as an "aerosol generation request" hereinafter) such as an inhalation operation by the user. Therefore, the inhalation device 100 may be understood as an aerosol generation device.

The inhalation device 100 can be formed by a power supply unit 101 and the stick 110. The stick 110 is, for example, a base material including an aerosol source and a flavor source. The aerosol source can be, for example, a liquid such as a polyhydric alcohol such as glycerin or propylene glycol. Alternatively, the aerosol source may contain a drug. The aerosol source may be a liquid, a solid, or a mixture of a liquid and a solid. A vapor source such as water may be used in place of the aerosol source. The flavor source can be, for example, a formed body obtained by forming a tobacco material. Alternatively, the flavor source may be formed by a plant (for example, mint, herb, Chinese medicine, coffee beans, or the like) other than tobacco. A fragrance such as menthol may be added to the flavor source. The flavor source may be added to the aerosol source.

The power supply unit 101 has a substantially rectangular parallelopiped shape with round corners that is elongated in the vertical direction of the sheet surface of each of Figs. 1A and 1B, and can be formed in a size which the user can grasp with one hand. The power supply unit 101 can include an outer panel 102, an action button B, and a slider 105.

The outer panel 102 is a flexible panel member that covers at least part of the front surface of the power supply unit 101. The outer panel 102 is an exterior member of the power supply unit 101, that is detachable for replacement, and may be understood as a decorative panel. For example, a plurality of outer panels different in color and pattern are prepared, and the user can replace the outer panel by a preferred outer panel. The outer panel 102 may be understood as a heat-insulating panel that insulates heat generated in the power supply unit 101, or as a protection panel that protects the inside of the power supply unit 101 from an impact or compression at the time of falling.

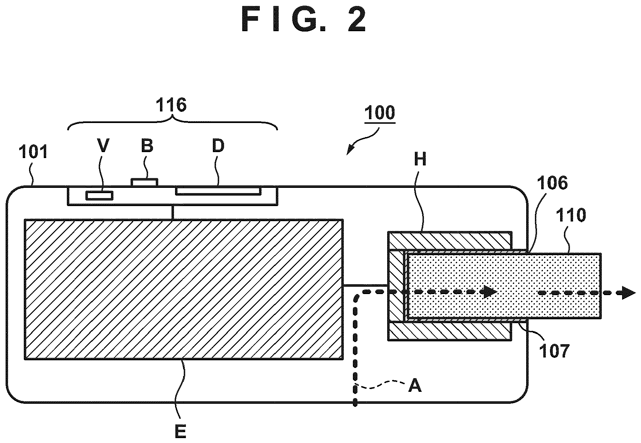

A display window 103 is formed in the outer panel 102. The display window 103 can be a band-like window extending along the longitudinal direction (the vertical direction of the sheet surface) in substantially the center of the outer panel 102. The power supply unit 101 includes a display D (display unit) as a notification unit (see Fig. 2). The display D can include, for example, one or more LEDs (Light-Emitting Diodes). Light emitted by the LED passes through the display window 103. The display D can display, for example, a residual battery amount by a bar graph.

The action button B is an operation button formed by a physical push button. The action button B is covered with the outer panel 102. However, since the outer panel 102 is flexible, the user can operate the action button B via the outer panel 102. When the user presses the action button B via the outer panel 102, a corresponding signal is transmitted to a control unit (to be described later). Note that this embodiment will describe, as an example, a case where the action button B formed by a physical button is covered with the outer panel 102 but another arrangement may be adopted as long as a user operation can be accepted. For example, instead of the action button B, another arbitrary type of input device such as a switch or a touch sensing surface exposed from the outer panel 102 may be provided.

Note that the outer panel 102 may be imparted with such rigidity that the user needs to push the outer panel 102 using a plurality of fingers to operate the action button B via the outer panel 102. This can prevent, for example, the action button B from being erroneously pressed in a bag or an unintended erroneous operation by the user. This is also advantageous in terms of prevention of child mischief (child resistance).

The slider 105 is a cover member (shutter) slidably disposed on the upper surface of the power supply unit 101 along a direction 105a indicated by an arrow. The slider 105 is configured to open/close an opening into which the stick 110 is inserted. Fig. 1A shows a state in which an opening 106 is covered with the slider 105. This state will also be referred to as a "shutter closed state" hereinafter. Fig. 1B shows a state in which the opening 106 is exposed by sliding the slider 105 to the near side. This state will also be referred to as a "shutter open state" hereinafter.

When inhaling aerosol using the inhalation device 100, the user operates the slider 105 to the shutter open state. After that, the user inserts the stick 110 into the opening 106. The inserted stick 110 is held by a tubular holding portion 107 communicating with the opening 106. A section perpendicular to the longitudinal direction of the holding portion 107 can be, for example, circular, elliptical, or polygonal, and the sectional area of the section gradually reduces toward the bottom surface. With this arrangement, the inner surface of the holding portion 107 pushes the outer surface of the stick 110 inserted into the holding portion 107, thereby making it possible to prevent a fall of the stick 110 by the frictional force. After that, the user can perform an unlock operation using the action button B. If the unlock operation is performed, the power supply unit 101 is unlocked to start heating the stick 110, thereby setting an inhalation enable state. When the inhalation enable state is thus set, the user can hold, in the mouth, a mouthpiece portion formed at the distal end of the stick 110 and inhale flavored aerosol. After the end of the inhalation of the aerosol, the user performs an operation of pulling out the stick 110 from the holding portion 107, and closing the slider 105 (shutter closed state).

Fig. 2 is a view showing the internal arrangement of the inhalation device 100. Note that Fig. 2 does not illustrate the outer panel 102. As described above, the power supply unit 101 includes the holding portion 107 that communicates with the opening 106 and holds the stick 110. Furthermore, the power supply unit 101 can include a heater H, an electrical component E, and a user interface 116. The electrical component E includes a power supply, and can function as a power supplier that supplies electric power from the power supply to the heater H. The user interface 116 may be understood to be included in the electrical component E. The heater H forms a heating unit that heats the stick 110. The heater H can include, for example, a resistive heat generating component that generates aerosol by heating an aerosol source included in the stick 110. As a resistive heat generating material of the resistive heat generating component, for example, a mixture of one or more of copper, a nickel alloy, a chromium alloy, stainless steel, and platinum rhodium can be used. The heater H is arranged to cover the periphery of the holding portion 107, and generates heat by electric power supplied from the electrical component E. The heat of the heater H is transmitted to the stick 110 via the holding portion 107, thereby heating the stick 110. When the stick 110 is heated, the stick 110 generates aerosol. The user interface 116 can include the action button B, the display D as a notification unit, and a vibration generation unit V. The vibration generation unit V can be formed by a vibration motor (vibrator) for vibrating the housing of the power supply unit 101. By vibrating the housing by the vibration motor, it is possible to notify the user, who holds the power supply unit 101, of the state.

If the user holds the mouthpiece portion at the distal end of the stick 110 in the mouth and performs an inhalation operation, air flows into the stick through an opening (not shown), as exemplified by a broken arrow A. When the heater H heats the stick 110, the vaporized and/or aerosolized aerosol source is transported toward the mouthpiece portion by air. In the process in which the aerosol source is transported toward the mouthpiece portion, the vaporized and/or aerosolized aerosol source is cooled to form fine liquid droplets, thereby promoting aerosolization. In the arrangement in which the flavor source is also included in the stick 110, a flavor material generated from the flavor source is added to the aerosol, and the resultant flavored aerosol is transported to the mouthpiece portion, and inhaled by the user's mouth.

Note that the example in which the heater H is incorporated in the power supply unit 101 has been described above. An arrangement in which a heater (atomizer), an aerosol source, and a flavor source are provided in the form of a cartridge, instead of the stick 110, may be adopted.

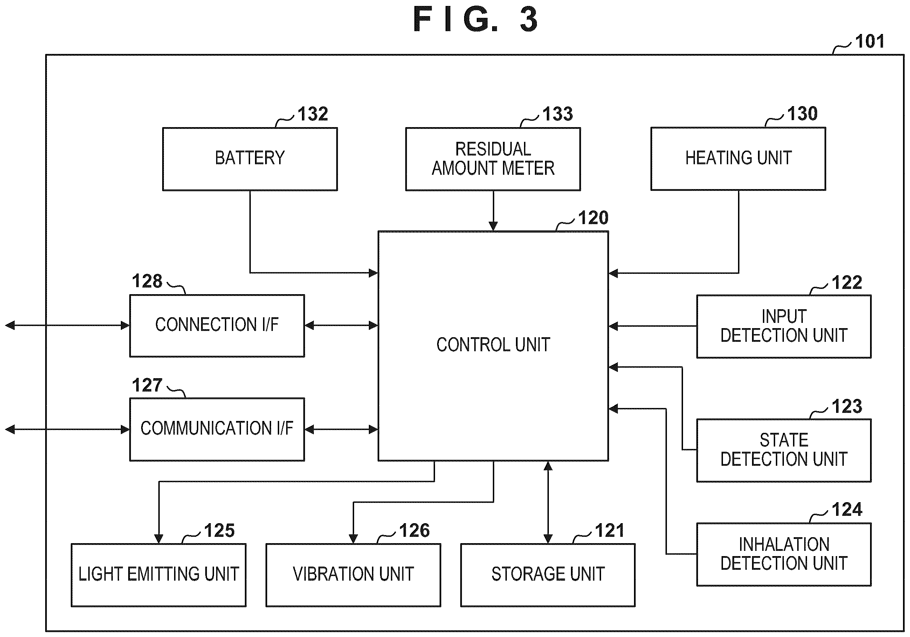

An example of the functional arrangement of the power supply unit 101 will be described next with reference to Fig. 3. Note that functional blocks to be described may be integrated or separated, and each function to be described may be implemented by another block. A component to be described as a hardware component may be implemented by a software component and vice versa.

A control unit 120 controls the operation of the power supply unit 101. The control unit 120 may include one or more processors and a volatile memory. The processor may be, for example, a CPU (Central Processing Unit) or a microcontroller. The control unit 120 controls all the functions of the inhalation device 100 by loading a computer program (also called software or firmware) stored in a storage unit 121 into the memory and executing the loaded program. The storage unit 121 can be, for example, a nonvolatile memory. The storage unit 121 stores one or more computer programs, and data describing a control sequence (heating profile) for controlling a heating unit 130. Note that the heating unit 130 is a functional unit that heats the stick 110, and is formed by the above-described heater H.

The control unit 120 can control communication (pairing or connection in a normal state) with an external communication device. Furthermore, the control unit 120 can control transition of the state of the inhalation device 100 in accordance with a user operation on the action button B or the slider 105. The control unit 120 controls supply of electric power from a battery 132 to the heating unit 130. In response to an aerosol generation request, the control unit 120 can start to supply electric power from the battery 132 as a power supply to the heating unit 130. The control unit 120 controls the temperature of the heating unit 130 by adjusting the duty ratio of a control pulse by pulse width modulation (PWM). Note that the control unit 120 may use pulse frequency modulation (PFM) instead of PWM.

An input detection unit 122 detects, for example, an operation input to the action button B. The input detection unit 122 detects a user operation performed by, for example, pushing the outer panel 102, and outputs an input signal indicating this user operation to the control unit 120. Note that the inhalation device 100 may detect pushing itself of the outer panel 102, instead of detecting the pressing of the action button B.

A state detection unit 123 detects the open/closed state of the slider 105. The state detection unit 123 can be formed by, for example, a Hall sensor including a Hall element. The state detection unit 123 outputs, to the control unit 120, a state detection signal indicating whether the slider 105 is open or closed. Furthermore, the state detection unit 123 can also detect an attached/detached state of the outer panel 102. Therefore, the state detection unit 123 can include, for example, magnetic sensors 23A and 23B described above. The state detection unit 123 can output a state detection signal indicating the attached/detached state of the outer panel 102 to the control unit 120.

An inhalation detection unit 124 (puff sensor) can detect inhalation (puff) of the stick 110 by the user. For example, the inhalation detection unit 124 can include a thermistor disposed near the opening 106. In this case, the inhalation detection unit 124 can detect inhalation by the user based on a change in resistance value of the thermistor resulting from a temperature change caused by the inhalation. As another example, the inhalation detection unit 124 may include a pressure sensor disposed on the bottom of the holding portion 107. In this case, the inhalation detection unit 124 can detect inhalation based on a reduction in atmospheric pressure resulting from an air current caused by the inhalation. The inhalation detection unit 124 outputs, to the control unit 120, for example, an inhalation detection signal indicating whether inhalation is performed.

A light emitting unit 125 includes one or more LEDs and a driver for driving the LEDs, thereby forming the display D. The light emitting unit 125 turns on each LED in accordance with an instruction signal input from the control unit 120. A vibration unit 126 forms the above-described vibration generation unit V The vibration unit 126 can include a vibrator (for example, an eccentric motor) and a driver for driving the vibrator. The vibration unit 126 vibrates the vibrator in accordance with an instruction signal input from the control unit 120. The control unit 120 may control at least one of the light emitting unit 125 and the vibration unit 126 in an arbitrary pattern, in order to notify the user of a certain status (for example, the status of pairing or detachment of the outer panel 102) of the inhalation device 100. For example, the light emission patterns of the light emitting unit 125 can be distinguished by elements such as the light emission state (always on/blinking/off), the blinking period, and the light color of each LED. The vibration patterns of the vibration unit 126 can be distinguished by elements such as the vibration state (vibration/stop) and the vibration strength of the vibrator.

A communication I/F 127 includes, for example, a communication circuit and an antenna, and serves as a communication interface with which the inhalation device 100 wirelessly communicates with an external communication device (for example, a smartphone, a personal computer, or a tablet terminal owned by the user). The communication I/F 127 can be, for example, an interface complying with an arbitrary wireless communication protocol, for example, short-range wireless communication such as Bluetooth^{®}, near-field wireless communication such as NFC (Near Field Communication), or a wireless LAN (Local Area Network).

A connection I/F 128 is a wired interface having a terminal for connecting the inhalation device 100 to another external device. The connection I/F 128 can be a chargeable interface such as a USB (Universal Serial Bus) interface. The connection I/F 128 may be used to charge the battery 132 from an external power supply (charger) (via a feeder (not shown)).

The battery 132 is a chargeable battery (secondary battery) such as a lithium-ion battery. Alternatively, the battery 132 may be formed by an electric double-layer capacitor such as a lithium-ion capacitor. A residual amount meter 133 can include an IC chip for monitoring the residual power amount and other statuses of the battery 132. The residual amount meter 133 can periodically measure the status values of the battery 132, such as the SOC (State Of Charge), the SOH (State Of Health), the RSOC (Relative SOC), and the power supply voltage, and can output the measurement results to the control unit 120.

### <Operation Modes>

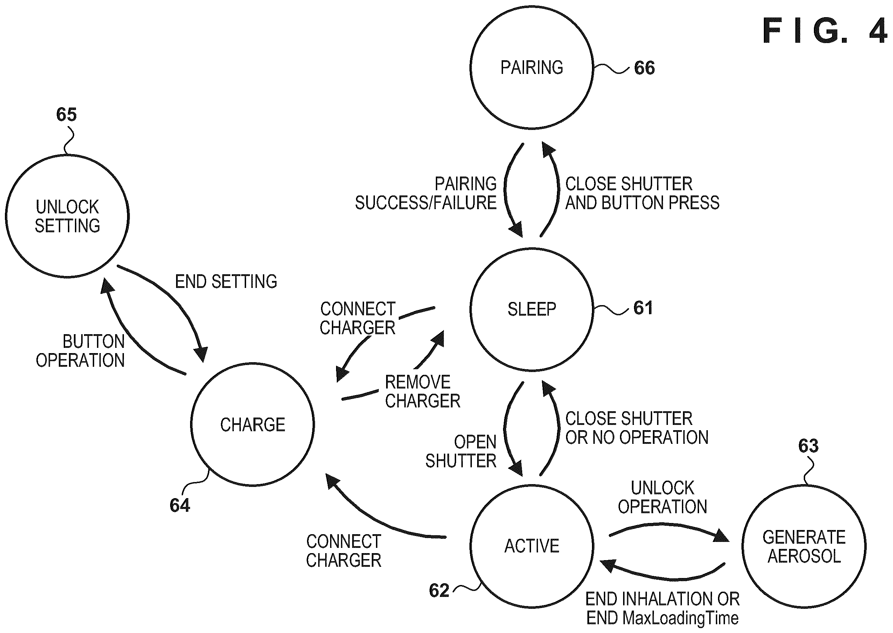

An example of transition of the state of the power supply unit 101 will be described with reference to Fig. 4. The control unit 120 has a plurality of operation modes. The plurality of modes can include, for example, a sleep mode 61, an active mode 62, an aerosol generation mode 63, a charging mode 64, an unlock setting mode 65, and a pairing mode 66.

The sleep mode 61 is a state in which the operation by the control unit 120 is temporarily stopped to stand by in a power-saving state in which the power consumption is reduced. The speed mode is a state in which the inhalation device 100 stops the main operation, and no electric power is supplied to the heater H. Display on the display D is not performed. In other words, in the sleep mode 61, the power supply unit 101 is locked and the user cannot inhale aerosol. In the sleep mode 61, the control unit 120 can accept a predetermined user input, and can transition to another mode corresponding to the user input upon accepting the corresponding user input. Note that in the following description, the speed mode will sometimes be referred to as a standby state. In this embodiment, the sleep mode 61 can be started by a method of "suspend" or "standby" by which the standby state begins while the contents of the memory of the control unit 120 are maintained, and can also be started by a method of "hibernation" by which the standby state begins while the contents of the memory of the control unit 120 are copied to the storage unit 121. In the sleep mode 61, functions need not be operable except for the function of detecting a user operation on the slider 105 or the action button B, and the function of monitoring the residual battery amount.

In the sleep mode 61, for example, if an operation of opening the slider 105 (an operation of setting the shutter open state) is performed, the control unit 120 can transition to the active mode 62 in which at least display on the display D is performed. In the active mode 62, if an operation of closing the slider 105 (an operation of setting the shutter closed state) is performed or if a non-operation state in which no user operation is performed for the power supply unit 101 continues for a predetermined time, the control unit 120 can return to the sleep mode 61 in which display on the display D is stopped to stand by in the power-saving state.

In the active mode 62, upon detecting an unlock operation, the control unit 120 unlocks the locked state of the power supply unit 101, and can transition to the aerosol generation mode 63 in which aerosol is generated. The unlock operation can be, for example, one pressing operation of the action button B. However, the unlock operation can be changed by setting. For example, the unlock operation can be an operation of repeatedly pressing the action button B a predetermined number of times (for example, three times) within a predetermined time, an operation of pressing the action button B for a predetermined time (for example, 3 sec), or a combination thereof. In the aerosol generation mode 63, the heating unit 130 performs heating (that is, supplies electric power to the heater H), and the user can inhale aerosol. Alternatively, the setting of the unlock operation may be disabled, and transition to the aerosol generation mode 63 may be performed in response to detection, by the inhalation detection unit 124 (puff sensor), of inhalation (puff) by the user. When the inhalation ends, or the inhalation time reaches a predetermined upper limit time (MaxLoadingTime), the control unit 120 can return to the active mode 62.

When an external power supply (charger) is connected to the connection I/F 128 in the sleep mode 61 or the active mode 62 (or the aerosol generation mode 63), the control unit 120 transitions to the charging mode 64 and the battery 132 is charged. When the external power supply is detached from the connection I/F 128 or the battery 132 is in a full charge state, the control unit 120 transitions to the sleep mode 61.

In the charging mode 64, for example, if a predetermined operation is performed on the action button B, the control unit 120 can transition to the unlock setting mode 65. In the unlock setting mode 65, the unlock operation is set. For example, the unlock operation in a default state can be, for example, one pressing operation of the action button B. In the unlock setting mode 65, the user can change this unlock operation to another operation. For example, the unlock operation can be set to an arbitrary pattern such as an operation of repeatedly pressing the action button B a predetermined number of times within a predetermined time, an operation of pressing the action button B for a predetermined time, or a combination thereof. This can improve security performance of the power supply unit 101. When the setting ends, the control unit 120 returns to the charging mode 64. Note that in this embodiment, transition to the unlock setting mode 65 is performed from the charging mode 64 but transition to the unlock setting mode 65 may be performed from an operation mode other than the charging mode 64.

If a predetermined pairing operation is performed in the sleep mode 61, the control unit 120 can transition to the pairing mode 66 for executing pairing with an external communication device. Pairing is processing of associating the power supply unit 101 with an external communication device, and can be performed with, for example, the external communication device in compliance with Bluetooth^{®}. The pairing operation can be, for example, an operation of pressing the action button B while the slider 105 is closed. In the pairing mode 66, if pairing with the external communication device succeeds, the control unit 120 registers identification information of the paired device in a white list stored in the storage unit 121. If registration in the white list succeeds or pairing fails, the control unit 120 can transition from the pairing mode 66 to the sleep mode 61.

### <Control Sequence>

The control unit 120 controls the power supplier formed by the electrical component E in accordance with a predetermined control sequence. In the embodiment, the control sequence can be a control sequence based on a control profile (temperature profile) in which time-series transition of the target temperature of the heater H is defined.

The control unit 120 controls supply of electric power from the battery 132 to the heating unit 130 so as to implement the temperature profile for providing a satisfactory user experience throughout a session. In this specification, the session indicates a period during which temperature control is performed to consume the aerosol source included in one product (in this example, the stick 110 held by the holding portion 107). The session can also be called a heating period. As a session, a period corresponding to the number of times (for example, 10 to 20 times) of inhalation of one general cigarette can be set. Temperature control performed by the control unit 120 may be feedback control (for example, PID control) using, as a controlled variable, a temperature index detected by a thermistor (not shown) arranged near the heating unit 130, and the duty ratio of power supply as a manipulated variable.

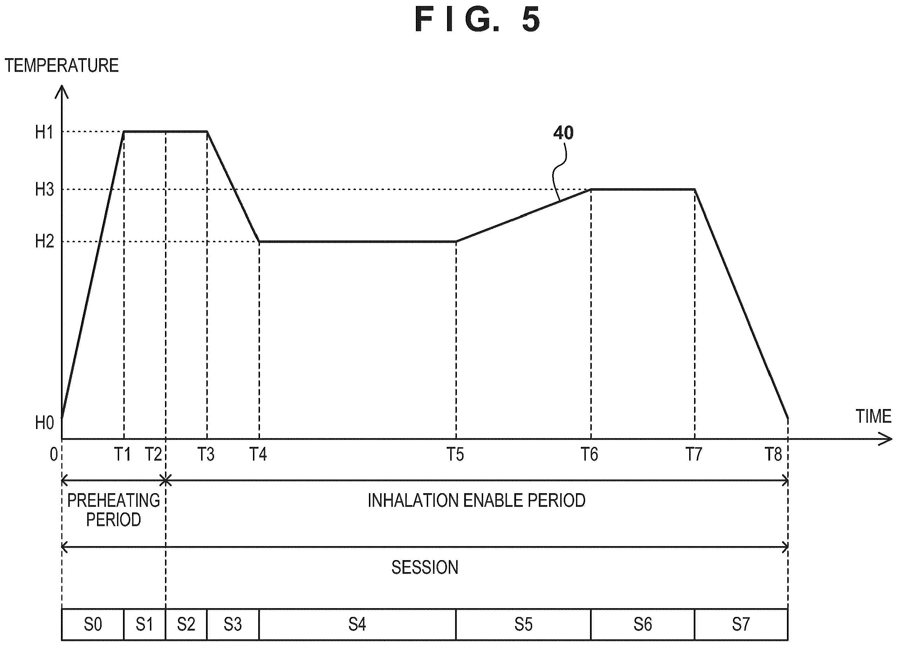

Fig. 5 is an explanatory view for explaining an example of a temperature profile that can be implemented in one session. In Fig. 5, the abscissa represents the elapsed time from the start of power supply to the heating unit 130, and the ordinate represents the temperature of the heating unit 130. A thick line represents a temperature profile 40 as an example. The temperature profile 40 includes a preheating period (T0 to T2) at the beginning, and an inhalation enable period (T2 to T8) following the preheating period. As an example, the whole length of the inhalation enable period can be about 5 min.

The preheating period includes a temperature rise section S0 (T0 to T1) in which the temperature of the heating unit 130 is rapidly raised from an environmental temperature H0 to a first temperature H1, and a retaining section S1 (T1 to T2) in which the temperature of the heating unit 130 is retained at the first temperature H1 until the end of the preheating period. By thus rapidly heating the heating unit 130 to the first temperature H1 at the beginning, it is possible to sufficiently spread heat to the whole aerosol generating base of the stick 110 in an early stage, and start providing the user with high-quality aerosol more rapidly.

The inhalation enable period includes a retaining section S2 (T2 to T3) in which the temperature of the heating unit 130 is retained at the first temperature H1 from the start of the inhalation enable period, a temperature lowering section S3 (T3 to T4) in which the temperature of the heating unit 130 is lowered to a second temperature H2, and a retaining section S4 (T4 to T5) (first section) in which the temperature of the heating unit 130 is retained at the second temperature H2. When the temperature of the heating unit 130, which is once raised to the first temperature H1, is lowered to the second temperature H2 as described above, it is possible to stably provide the user with inhalation with a good tobacco flavor for a longer time. In the temperature lowering section S3, supply of electric power from the battery 132 to the heating unit 130 may be stopped. The inhalation enable period further includes a temperature rise section S5 (T5 to T6) (second section) in which the temperature of the heating unit 130 is gradually raised from the second temperature H2 to a third temperature H3, a retaining section S6 (T6 to T7) in which the temperature of the heating unit 130 is retained at the third temperature H3, and a temperature lowering section S7 (T7 to T8) in which the temperature of the heating unit 130 is lowered to the environmental temperature H0. When the temperature of the heating unit 130 is raised again in the second half of the inhalation enable period as described above, it is possible to suppress a decrease in tobacco flavor in a situation in which the amount of the aerosol source included in the stick 110 decreases, and provide the user with a highly satisfactory experience to the end of the inhalation enable period.

Note that the above-described temperature profile is merely an example, and another temperature profile suitable to a stick including a different kind of aerosol source or flavor source may be used. As will be described later, the temperature profile can be changed.

### <Notification Control>

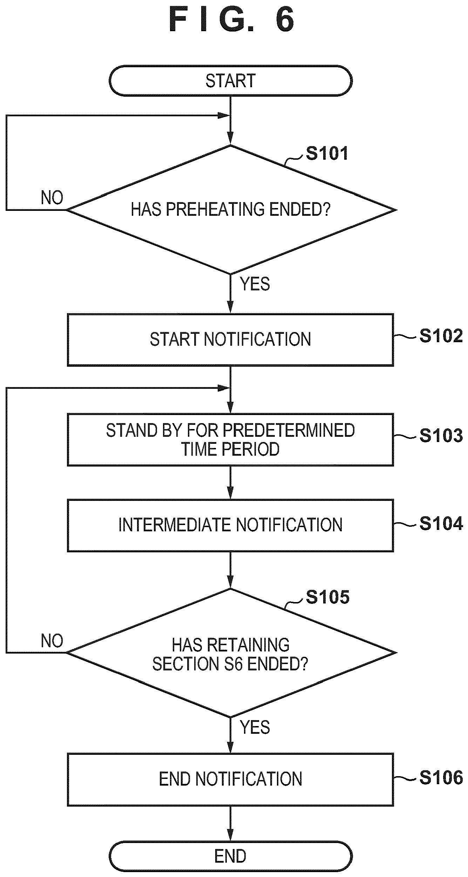

The control unit 120 controls power supply from the battery 132 to the heating unit 130 (heater H) in accordance with the above-described control sequence. In addition to the control of power supply, the control unit 120 controls notification by a notification unit during the inhalation enable period determined by the control sequence. Fig. 6 shows an example of the sequence of notification control by the control unit 120. This notification control is started when the control unit 120 transitions to the aerosol generation mode 63 to start power supply to the heater H. Note that in this flowchart, the control of power supply which is parallelly performed is not mentioned and only control concerning notification is described.

In step S101, the control unit 120 determines whether the preheating period has ended. When, for example, a predetermined time elapses after the end of the temperature rise section S0, the control unit 120 determines that the retaining section S1 has ended, thereby determining that the preheating period has ended. The end of the preheating period can be synonymous with the start of the inhalation enable period. In step S102, the control unit 120 makes a start notification to notify the user of the start of the inhalation enable period. The start notification is made by, for example, light emission in a predetermined light emission pattern by the light emitting unit 125 and a vibration in a predetermined vibration pattern by the vibration unit 126. By sensing the notification, the user recognizes that the device is ready for inhalation and the user can start inhalation.

After standing by for a predetermined time (for example, 15 sec) in step S103, the control unit 120 makes an intermediate notification in step S104. The intermediate notification is a notification that is made at one or more intermediate timings during the inhalation enable period. The intermediate notification is preferably executed in a form different from that of the start notification so that the user can discriminate the intermediate notification from the start notification made in step S102. For example, the intermediate notification is made not by light emission by the light emitting unit 125 but only by a vibration by the vibration unit 126.

As an intermediate notification, the control unit 120 may notify the user of a timing, during the inhalation enable period determined by the control sequence, at which the amount of a flavor component contained in aerosol becomes a predetermined amount. The timing at which the amount of the flavor component contained in the aerosol becomes the predetermined amount may be the start timing of the retaining section S6 (T6 to T7) in which the temperature of the heating unit 130 is retained at the third temperature H3. By sensing the notification, the user can know a timing at which he/she can actually feel improvement of a tobacco flavor by a temperature rerise.

In step S105, the control unit 120 determines whether the retaining section S6 as the last retaining section in the temperature profile has ended. If the retaining section S6 has not ended, the control unit 120 returns to step S103 to stand by for the predetermined time, and makes an intermediate notification in step S104. In this way, the intermediate notification is repeatedly made at a predetermined interval until the retaining section S6 ends. This intermediate notification allows the user to recognize that the current time is in the inhalation enable period.

If it is determined that the retaining section S6 has ended, the control unit 120 makes, in step S106, an end notification to notify the user of the end of the inhalation enable period. Note that in this embodiment, the end of the retaining section S6 indicates the start of the temperature lowering section S7, and the inhalation enable period has not strictly ended. Therefore, the end notification may be understood as a notification (end advance notification) to previously notify the user of the end of the inhalation enable period. The end notification (end advance notification) is preferably executed in a form different from that of the intermediate notification so that the user can discriminate the end notification from the intermediate notification. The end notification may be made in the same form as that of the start notification. That is, for example, the end notification may be made by light emission in a predetermined light emission pattern by the light emitting unit 125 and a vibration in a predetermined vibration pattern by the vibration unit 126. By sensing the end notification, the user recognizes that he/she needs to end inhalation.

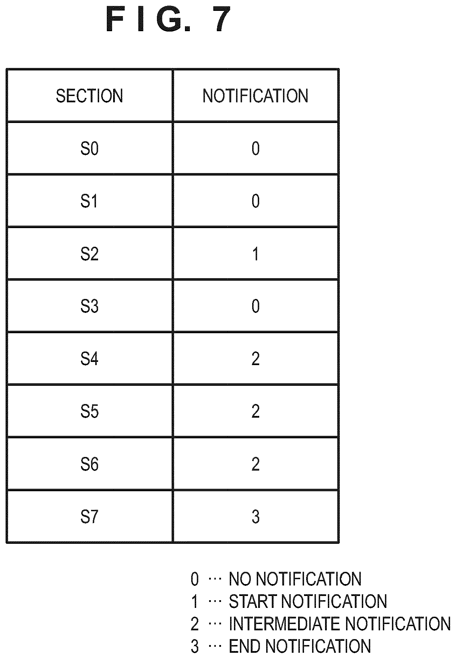

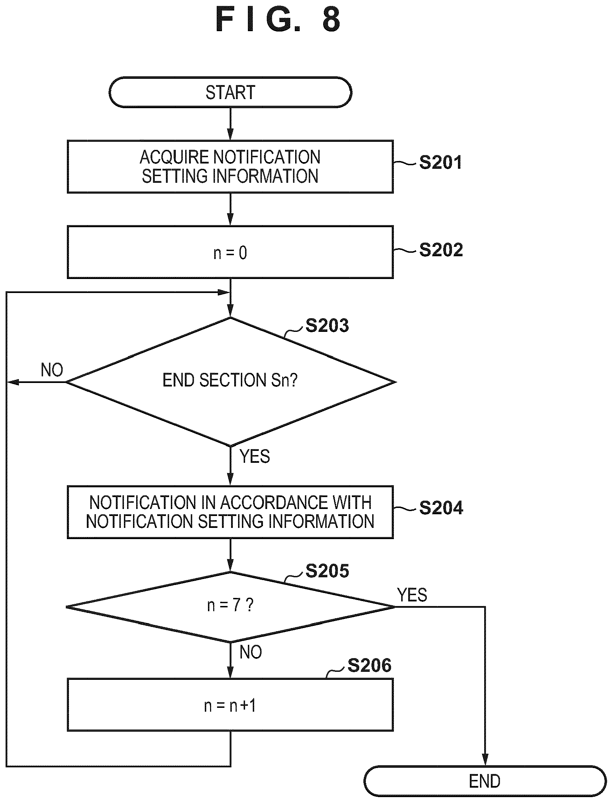

Next, another example of notification control by the control unit 120 will be described with reference to Figs. 7 and 8. In this example, notification is controlled for each section of the temperature profile.

Fig. 7 shows an example of notification setting information that defines the contents of a notification in each section in one session according to the temperature profile. The notification setting information is stored in, for example, the storage unit 121. In the notification setting information shown in Fig. 7, a notification setting value of 0 indicates that no notification is made, a setting value of 1 indicates that a start notification is made, a setting value of 2 indicates that an intermediate notification is made, and a setting value of 3 indicates an end notification is made. For example, the setting values for the sections S0 and S1 corresponding to the preheating period are 0, and no notification is made in these sections. The setting value for the section S2 in which the inhalation enable period begins is 1, and a start notification is made. The setting values for the sections S4, S5, and S6 are 2 and an intermediate notification is made. The setting value for the section S7 is 3 and an end notification is made. Note that in the example shown in Fig. 7, only the setting value representing the type of a notification is defined but a data structure in which a setting value for defining the form (a light emission pattern, a vibration pattern, a notification timing, a repetition frequency, a strength, and the like) of each of the start notification, the intermediate notification, and the end notification is further defined may be used.

Fig. 8 is a flowchart illustrating an example of notification control using the notification setting information shown in Fig. 7. Note that in this flowchart as well, the control of power supply which is parallelly performed is not mentioned and only control concerning notification is described.

In step S201, the control unit 120 acquires (reads out) the notification setting information from the storage unit 121. After that, the control unit 120 initializes a variable n representing a section number to 0.

In step S203, the control unit 120 stands by for the end of a section Sn (n is a variable). If the section Sn ends, the control unit 120 advances to step S204, and specifies a notification setting value for the section Sn with reference to the notification setting information, and executes a notification corresponding to it.

After that, in step S205, the control unit 120 determines whether the variable n has reached the number (in this example, 7) of the last section of the temperature profile. If the variable n has not reached the number of the last section, the control unit 120 increments the variable n by 1 in step S206, and returns to step S203. When the variable n reaches the number of the last section of the temperature profile in step S205, the process ends.

In an example, the control unit 120 confirms, from the notification setting information acquired in step S201, an intermediate notification immediately after a start notification and an intermediate notification immediately before an end notification. More specifically, if the timing difference between the start notification and the intermediate notification immediately after it is shorter than a predetermined value, the control unit 120 disables the intermediate notification. In addition, if the timing difference between the end notification and the intermediate notification immediately before it is shorter than a predetermined value, the control unit 120 disables the intermediate notification. This can prevent the intermediate notification and the start notification or the end notification from being made at almost the same time.

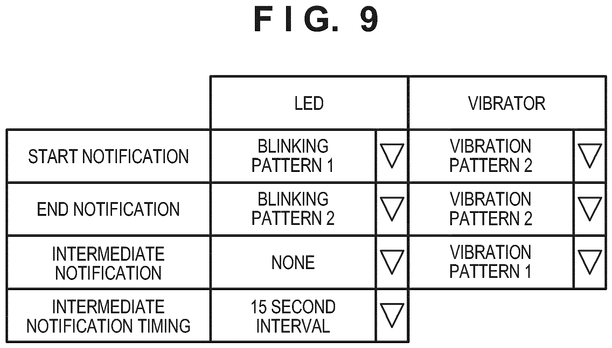

The control unit 120 may enable setting of each notification based on information input by the user. For example, in the pairing mode 66, the control unit 120 executes pairing with an external communication device via the communication I/F 127 (communication unit). After that, the control unit 120 may display a notification setting screen shown in Fig. 9 on the display unit of the paired external communication device, thereby allowing the user to set, for each notification, the form of the notification. In the example shown in Fig. 9, as the form of the notification, the blinking pattern of the light emitting unit 125 (LED) and the vibration pattern of the vibration unit 126 (vibrator) can each be selected from a plurality of candidates. Furthermore, in the example shown in Fig. 9, with respect to the timing of an intermediate notification, a repetition interval can be selected from a plurality of candidates. The information set in this setting screen is stored in the storage unit 121. The control unit 120 can provide, in forms according to the user's preference, the start notification, the end notification, and the intermediate notifications in accordance with the information stored in the storage unit 121.

Among the plurality of intermediate notifications, for example, the control unit 120 may differentiate the forms of the notifications in the retaining section S4 and the temperature rise section S5. For example, for the intermediate notification in the temperature rise section S5, a stronger vibration may be applied or a vibration may be applied for a longer time, as compared with the intermediate notification in the retaining section S4. This allows the user to recognize that the second half of the inhalation enable period has begun.

Furthermore, the control unit 120 can change the temperature profile to use another temperature profile suitable to a stick including a different kind of aerosol source or flavor source. For example, in the pairing mode 66, the control unit 120 executes pairing with an external communication device via the communication I/F 127 (communication unit). After that, the control unit 120 can download a desired temperature profile from an external server via the paired external communication device. The downloaded temperature profile is stored in the storage unit 121. The control unit 120 can execute temperature control using the temperature profile stored in the storage unit 121. In this case, in response to a change of the temperature profile, the control unit 120 can change the timings of the start notification, the end notification, and the intermediate notification.

According to the above-described embodiment, a notification concerning inhalation is made to the user appropriately during the inhalation enable period. Especially, according to the above-described embodiment, it is possible to appropriately notify the user of the timing at which it is possible to provide a flavor to be desirably provided to the user.

The invention is not limited to the foregoing embodiments, and various variations/changes are possible within the spirit of the invention.

This application claims priority from Japanese Patent Application No. 2021-076016 filed April 28, 2021, which is hereby incorporated by reference herein.

## Claims

1. A power supply unit, that supplies electric power to a heater configured to heat an aerosol source, for an inhalation device configured to generate aerosol added with a flavor component, **characterized by** comprising:
a power supply;
a power supplier configured to supply electric power from the power supply to the heater;
a notification unit; and
a control unit configured to control the power supplier and the notification unit,
wherein the control unit controls the power supplier in accordance with a predetermined control sequence, and controls the notification unit to make a notification of at least one timing including a timing at which an amount of the flavor component contained in the aerosol becomes a predetermined amount during an inhalation enable period determined by the control sequence.

2. The power supply unit according to claim 1, **characterized in that** the control unit sets at least one of a timing and a pattern of the notification.

3. The power supply unit according to claim 2, **characterized by** further comprising a communication unit configured to communicate with an external communication device,
wherein the control unit executes, via the communication unit, pairing for associating the power supply unit and the external communication device with each other, and sets at least one of the timing and the pattern of the notification using the paired external communication device.

4. The power supply unit according to any one of claims 1 to 3, **characterized in that**
the control unit controls the notification unit to further make a start notification to notify of a start of the inhalation enable period and an end advance notification to notify of an end of the inhalation enable period, and
the notification is a notification in a form different from forms of the start notification and the end advance notification.

5. The power supply unit according to claim 4, **characterized in that** the control unit disables a notification whose timing difference from one of the start notification and the end advance notification is shorter than a predetermined value.

6. The power supply unit according to any one of claims 1 to 5, **characterized in that**
the control sequence is a control sequence based on a control profile in which time-series transition of a target temperature of the heater is defined,
the control profile includes a first section in which a second temperature lower than a first temperature raised by preheating is retained, and a second section in which a temperature of the heater is raised to a third temperature higher than the second temperature after the first section, and
a form of a notification in the first section is different from a form of a notification in the second section.

7. The power supply unit according to claim 6, **characterized in that** in a case where the control profile is changed, the control unit changes a timing of the notification in accordance with the changed control profile.
